Europäisches Patentamt

European Patent Office

Office européen des brevets

(19)

(11) Veröffentlichungsnummer: **0 065 330**
**B1**

(12) **EUROPÄISCHE PATENTSCHRIFT**

(45) Veröffentlichungstag der Patentschrift:
21.08.85

(21) Anmeldenummer: 82200528.6

(22) Anmeldetag: 03.05.82

(51) Int. Cl.⁴: **F 27 D 1/12,** F 27 D 1/18,
C 21 C 5/40

(54) Flüssigkeitskühlvorrichtung für Industrieöfen.

(30) Priorität: 20.05.81 CH 3280/81

(43) Veröffentlichungstag der Anmeldung:
24.11.82 Patentblatt 82/47

(45) Bekanntmachung des Hinweises auf die Patenterteilung:
21.08.85 Patentblatt 85/34

(84) Benannte Vertragsstaaten:
AT BE CH DE FR GB IT LI NL SE

(56) Entgegenhaltungen:
EP - A - 0 004 614
DE - A - 2 734 922
DE - A - 2 854 306
DE - B - 1 085 903
DE - B - 1 249 896
DE - C - 492 432
FR - A - 1 349 494
GB - A - 482 143
JP - A - 52 123 991

Patent Abstracts of Japan, vol. 2, no. 24, 16.2.78, S.
4157C77

(73) Patentinhaber: BBC Aktiengesellschaft Brown, Boveri &
Cie., Haselstrasse, CH-5401 Baden (CH)

(72) Erfinder: Bühler, Karl, Oberdorfstrasse 28,
CH-5415 Nussbaumen (CH)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

BUNDESDRUCKEREI BERLIN

## Beschreibung

Die Erfindung bezieht sich auf eine Flüssigkeitskühlvorrichtung für thermisch hochbeanspruchte Bauteile eines Industrieofens mit vertikal angeordneten, von Flüssigkeit durchströmten Kühlkanälen.

Bauteile von Industrieöfen, die thermisch hoch beansprucht sind, z. B. Kesselwände, Deckelrahmen, Türrahmen, Gasabsaugstutzen etc., müssen während des Betriebes intensiv gekühlt werden, um Deformationen an diesen Bauteilen zu vermeiden oder gar ihre Zerstörung zu verhindern.

Die zu kühlenden Bauteile, insbesondere Lichtbogenofenkesselwände, sind großflächig. Das bedeutet, daß die Kühlflüssigkeit in den Kühlvorrichtungen derart zu leiten ist, daß eine möglichst gleichmäßige Kühlwirkung über die gesamten zu kühlenden Ofenflächen erzielt wird. Eine einwandfreie Beherrschung der Kühlung in einem Industrieofen mittels Flüssigkeit ist für die Betriebssicherheit der Ofenführung von entscheidender Bedeutung, um das Betriebspersonal vor Gefahren zu schützen und um Sachschäden zu vermeiden.

Eine derartige Flüssigkeitskühlvorrichtung ist aus der Veröffentlichung »Wasserführende Zustellung für Elektrolichtbogen-Schmelzöfen«, undatiert, der Firma Mannesmann Demag, Abbildung auf der Titelseite, bekannt.

Mit dieser vertikalen Kühlanordnung ergeben sich zwar konstruktive Vorteile gegenüber der herkömmlichen waagrechten, wendelförmigen Anordnung der Kühlkanäle, aber dem Problem der lokalen Überhitzung und der Gasblasenbeseitigung aus dem Kühlsystem wird bei dieser Konzeption zu wenig Rechnung getragen.

In der Veröffentlichung »Patent Abstracts of Japan, Vol. 2, No. 24 vom 16. 02. 78, Seite 4157 C 77« ist eine Flüssigkeitskühlvorrichtung zur Kühlung geschmolzener Schlacke bei gleichzeitiger Rückgewinnung von Wärme, welche an die Kühlflüssigkeit abgegeben wird, beschrieben. Die in den einzelnen vertikal angeordneten Kühlrohren eventuell entstehenden Gasblasen werden zwar direkt in einen am oberen Ende der Kühlrohre befindlichen und mit den Kühlrohren in Verbindung stehenden Kühlflüssigkeitsabführungskanal geleitet und von dort aus aus dem Kühlsystem entfernt. Diese Lösung hat aber den Nachteil, daß zwei Kanäle vorhanden sind, und zwar ein erster für die Kühlflüssigkeitszuführung und ein zweiter für die Kühlflüssigkeitsabführung.

Gasblasen können in einer Kühlflüssigkeit auf zwei verschiedene Arten entstehen, einmal als Dampf, z. B. bei Wasserkühlung, und zum anderen durch Ausscheidung vorher absorbierter Gase aus der Kühlflüssigkeit bei höherer Temperatur. Die entstehenden Gase werden sich in den oberen Rohrbögen sammeln, und die Strömungsgeschwindigkeit der Kühlflüssigkeit wird nicht ausreichen, um die Gase vertikal nach unten zu fördern, um sie durch die unteren Rohrbögen in den nächstfolgenden vertikalen Rohrabschnitt weiter in Richtung Kühlflüssigkeitsaustritt zu bewegen. Im Normalfall werden sich die Kühlkanäle, je nach Gasmenge, ganz oder teilweise mit Gas auffüllen, wobei dann die Kühlflüssigkeit lediglich durch einen Teilquerschnitt, im Extremfall diskontinuierlich pulsierend, durch die Kühlkanäle hindurchtreten kann. Die Kühlwirkung wird an den betreffenden Stellen stark herabgesetzt, und der gesamte Kühlkreislauf kommt zum Erliegen. Zu den geschilderten Vorgängen tritt ein weiteres Merkmal hinzu, das die Dimensionierung der Kühlmittelpumpe betrifft. Die Pumpe muß in dem Fall, daß sich Gas im Kühlkreislauf befindet, einen Mehrdruck aufbringen, der der Summe der Höhen, der infolge von Gaseinschlüssen fehlender Druckmittelsäule, entspricht. Eine Überdimensionierung des Pumpendruckes über das für die normale Umwälzung der Kühlflüssigkeit erforderliche Maß hinaus würde zwangsläufig zur Verwendung größerer Pumpen und somit zu höheren Investitionskosten führen.

Hier will die Erfindung Abhilfe schaffen. Die Erfindung, wie sie in den Ansprüchen gekennzeichnet ist, löst die Aufgabe, eine Kühlvorrichtung mit im wesentlichen vertikal angeordneten, von Flüssigkeit durchströmten Kühlkanälen zu schaffen, mit der thermisch hochbeanspruchte Bauteile von Industrieöfen in optimaler Weise gekühlt werden können.

Die durch die Erfindung erreichten Vorteile sind insbesondere darin zu sehen, daß eine praktisch beliebig große Anzahl von im wesentlichen vertikalen Kühlkanälen innerhalb eines Flüssigkeitskühlkreislaufes in Serie geschaltet werden können und daß Gase, die an sogenannten »hot spots« (heiße Stellen) im Kühlsystem entstehen, unverzüglich entfernt werden. Dadurch wird die Kühlleistung gesteigert und durch Verringerung der Kühlkreisläufe pro Ofeneinheit reduzieren sich gleichfalls die Kontrollinstrumente für die Überwachung der Kühlflüssigkeitstemperatur und -Strömungsgeschwindigkeit. Dies bringt eine Senkung der Investitionskosten mit sich. Ein weiterer Vorteil besteht darin, daß sich die durch die Kühlkanäle geflossene und erwärmte Kühlflüssigkeit im oberen Teil der Kühlkanäle mit der kalten, direkt durch die Bypassöffnungen der Verbindungsrohre geströmte Kühlflüssigkeit vermischt und abgekühlt wird, bevor sie in die nächstfolgenden Kühlkanäle, der in Serie geschalteten Kühlelemente strömt. Eventuell entstehende Gasblasen werden entweder eliminiert oder ohne auch nur einen einzigen Kühlkanal zu passieren, abgeführt.

Gemäß Anspruch 2 sind die Bypassöffnung(en) derart bemessen, daß unter Berücksichtigung des hydraulischen Widerstandes der zugeordneten Kühlkanäle eine vorbestimmbare Kühlflüssigkeitsmenge durch die Bypassöffnung(en) strömt die kleiner als diejenige ist, die durch zugeordnete Kühlkanäle strömt. Mit dieser konstruktiven Maßnahme werden eventuell entstehende Dampf- oder Gasblasen unverzüglich aus dem Kühlsystem entfernt.

Nach Anspruch 3 ist die Kühlflüssigkeitsmenge, die durch die Bypassöffnung(en) strömt gleich groß oder größer als diejenige, die durch die zugeordneten Kühlkanäle strömt. Auf diese Weise werden nicht nur eventuell entstehende Gasblasen entweder eliminiert oder ohne auch nur einen einzigen Kühlkanal zu passieren, abgeführt, sondern die durch die Kühlkanäle geführte und erwärmte Kühlflüssigkeit wird durch die direkt durch die Bypassöffnung(en) geströmte Kühlflüssigkeit abgekühlt, bevor sie in die nächstfolgenden Kühlkanäle wieder eintritt.

Die Durchflußmenge, Strömungsgeschwindigkeit etc. der Kühlflüssigkeit, die in die Kühlkanäle eingeleitet wird und die Kühlkanäle selbst können so dimensioniert werden, daß ein Teil der Kühlflüssigkeit in den Kühlkanälen verdampft und der Dampf unverzüglich durch die zugeordneten Bypassöffnungen jedes zugeordneten Kühlkanalpaares in der Kühlflüssigkeitsverteilkammer aus dem Kühlsystem entfernt wird, ohne daß es zu einer gegenseitigen, für die Kühlwirkung nachteiligen Beeinflussung zwischen Kühlflüssigkeit und Dampf kommt. Man erhält auf diese Weise, im Gegensatz zur vorstehend geschilderten klassischen Flüssigkeitskühlung, eine kombinierte Flüssigkeits-Dampfkühlung, wobei die zur Verdampfung benötigte Wärme den zu kühlenden Bauteilen entzogen und so zur Kühlung nutzbar gemacht wird.

Entsprechend Anspruch 5 weisen die Bypassöffnungen einzeln oder in Gruppen stufenweise in Strömungsrichtung der Kühlflüssigkeit anwachsende Durchtrittsöffnungen auf. Diese konstruktive Maßnahme ist insbesondere bei einer kombinierten Wasser- und Dampfkühlung wesentlich, da durch die in Strömungsrichtung der Kühlflüssigkeit sich vergrößernde Durchtrittsöffnungen der Bypasse der Wasserdampf auf einfache Weise aus dem Kühlsystem entweichen kann.

Die nachfolgenden Ansprüche 6 bis 12 beschreiben die Anordnung der Bypassöffnungen in der Kühlflüssigkeitsverteilkammer, sowie die konstruktiven Ausbildungsformen der Kühlkanäle.

Gemäß Anspruch 6 sind die Bypassöffnungen zwischen der oberen Kante der Trennwände und der oberen Wand der Kühlflüssigkeitsverteilkammer angeordnet.

Gemäß Anspruch 7 sind die Kühlkanäle aus einem U-förmig gebogenen Rohr gebildet, dessen obere Enden durch ein Verbindungsrohr kurzgeschlossen sind.

Nach Anspruch 8 bestehen die Kühlkanäle aus einem U-förmig gebogenen Rohr, dessen obere Enden in die Kühlflüssigkeitskammer münden.

Entsprechend Anspruch 9 besteht die Flüssigkeitskühlvorrichtung aus einem unten verschlossenen Rohr, in welchem mittig eine in Rohrlängsrichtung verlaufende Scheidewand angeordnet ist, die vom unteren Rohrrand beabstandet ist und die zuunterst im Rohr einen Durchtritt für die Kühlflüssigkeit freiläßt.

Nach Anspruch 10 ist das Rohr gemäß Anspruch 8 unten mit einem Deckel, vorzugsweise mit einer Kalotte verschlossen.

Gemäß Anspruch 11 besteht die Flüssigkeitskühlvorrichtung aus einem äußeren Rohr, welches am unteren Ende mit einem Deckel bzw. einer Kalotte verschlossen ist, in welchem ein unten offenes inneres Rohr befestigt ist, wobei das innere Rohr für die Kühlflüssigkeitszufuhr und das äußere Rohr für die Kühlflüssigkeitsabführung dient.

Anspruch 12 beschreibt, daß die Kühlflüssigkeitskammer in Strömungsrichtung der Kühlflüssigkeit gegenüber der Horizontalen nach oben geneigt ist, wobei insbesondere dem Auftrieb der Gase im Kühlsystem Rechnung getragen ist.

Nach Anspruch 13 sind die Scheidewand, die die Kühlkanäle voneinander trennt, und die Trennwand in der Kühlflüssigkeitsverteilkammer, einstückig ausgebildet.

Ansprüche 14 bis 16 weisen auf den Verwendungszweck der Flüssigkeitskühlvorrichtung bei Elektroöfen hin. Dieser dient gemäß Anspruch 14 für die Wandung eines Elektroofens, die nach Anspruch 15 oberhalb des Badspiegels des Ofens angeordnet ist.

Nach Anspruch 16 wird ein Rauchgasabzugsstutzen eines Elektroofens flüssigkeitsgekühlt, wobei die Kühlkanäle in die Wandung des Stutzens integriert sind.

Die Erfindung wird nachstehend anhand in der Zeichnung dargestellter Ausführungsbeispiele näher erläutert. In der Zeichnung zeigt

Fig. 1 einen vertikalen Schnitt durch eine Flüssigkeitskühlvorrichtung,

Fig. 2 einen vertikalen Schnitt durch eine Flüssigkeitskühlvorrichtung mit Kühlflüssigkeitsverteilkammer,

Fig. 3 einen horizontalen Schnitt durch die Kühlflüssigkeitsverteilkammer gemäß Fig. 2,

Fig. 4 einen vertikalen Schnitt durch die Flüssigkeitsverteilkammer und Kühlkanal gemäß Fig. 2,

Fig. 5 bis 7 vertikale Schnitte durch Weiterbildungen der Flüssigkeitskühlvorrichtung,

Fig. 8 eine perspektivische Darstellung eines Rauchgasabzugsstutzens mit teilweisem Schnitt.

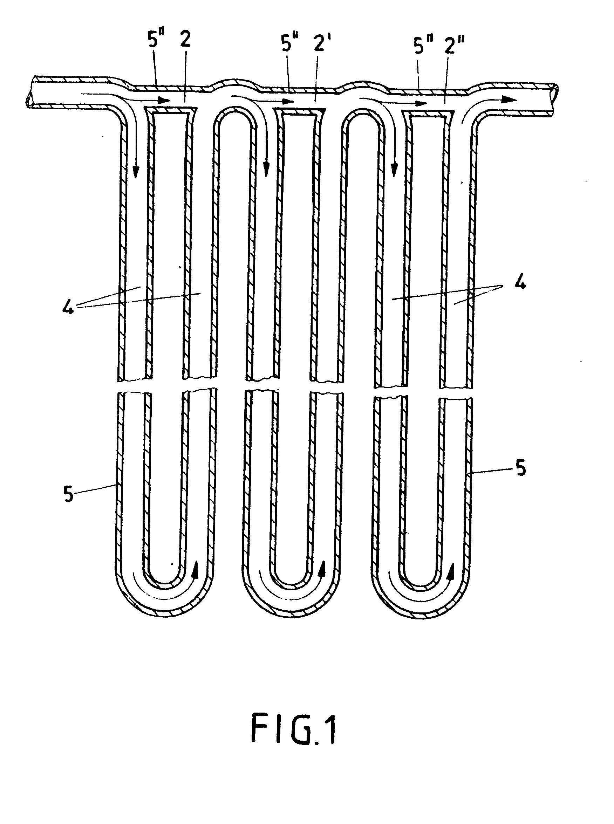

Gemäß Fig. 1 ist eine beispielsweise Ausführungsform der erfindungsgemäßen Flüssigkeitskühlvorrichtung dargestellt. Die Zeichnung ist vereinfacht als vertikaler Schnitt wiedergegeben. Die Kühlkanäle 4 werden durch vertikal angeordnete Rohre 5 gebildet, die am unteren und oberen Ende jeweils U-förmig gebogen sind.

Zwischen den jeweils unten U-förmig gebogenen Rohrpaaren 5 sind im oberen Teil der Rohre 5 Verbindungsrohre 5'' angeordnet, die parallel zu den Kühlkanälen 4 Bypassöffnungen 2, 2', 2'' freigeben. Entsprechend der gezeichneten Pfeile strömt die Kühlflüssigkeit durch einen nicht dargestellten Anschlußstutzen in den linken oberen Kühlkanal 4 ein und teilt sich in zwei Strömungsrichtungen auf. Die eine führt durch den Kühlkanal 4, und die andere wird durch die Bypassöffnung 2 des Verbindungsrohres 5'' geleitet. In dem U-förmigen Teilstück des Kühlkanals 4 zwischen den Bypassöffnungen 2 und 2' treffen dann beide Teilströme wieder zusammen und mischen sich, wobei die durch den Kühlkanal 4 geführte und erwärmte Kühlflüssigkeit durch die direkt durch die Bypassöffnung 2 getretene noch kalte Kühlflüssigkeit, abgekühlt wird. Eventuell entstehende Dampf- und/oder Gasblasen in der Kühlflüssigkeit werden entweder eliminiert oder ohne auch nur einen einzigen Kühlkanal zu passieren, abgeführt. In Fig. 1 sind lediglich 3 Kühlkanalpaare 4 mit den zugeordneten Bypassöffnungen 2, 2' und 2'' dargestellt. Selbstverständlich kann eine beliebig große Anzahl von Kühlkanälen 4 innerhalb eines Kühlkreislaufes in Serie geschaltet werden.

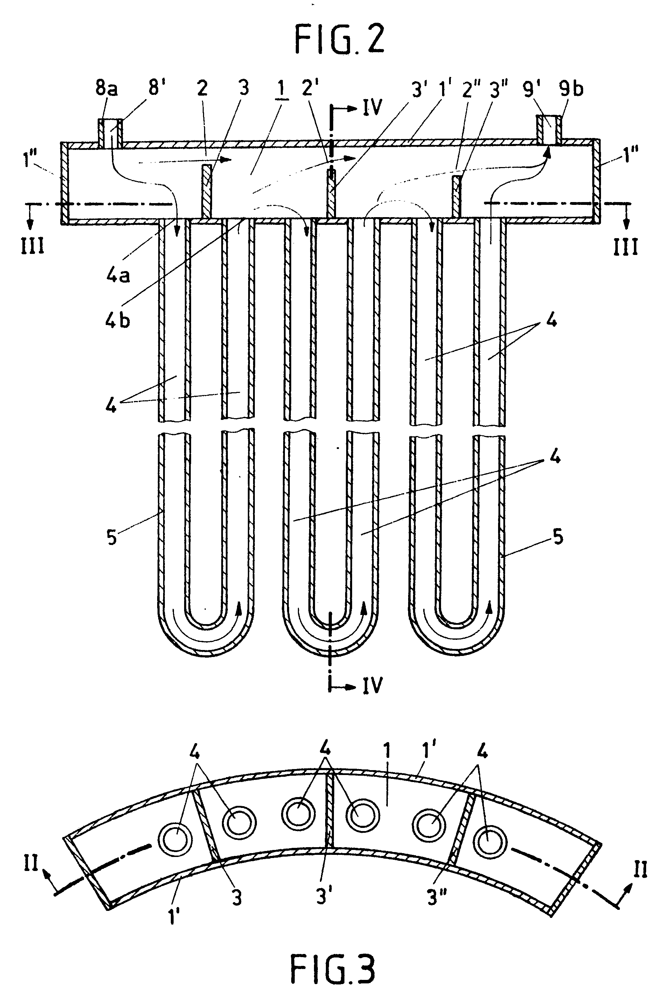

Gemäß Fig. 2 ist eine beispielsweise Ausführungsform der erfindungsgemäßen Flüssigkeitskühlvorrichtung dargestellt. Die Zeichnung ist wiederum vereinfacht als vertikaler Schnitt wiedergegeben. Die gezeichnete Funktionseinheit besteht aus einer Kühlflüssigkeitsverteilkammer 1, und mit von Flüssigkeit durchströmten, vertikal angeordneten Kühlkanälen 4, wobei die Kühlkanäle 4 aus einem U-förmigen Rohr 5 gebildet sind, dessen obere Enden in die Kühlflüssigkeitskammer münden. In Fig. 1 sind drei U-förmig gebogene Rohre 5, die jeweils ein Kühlkanalpaar bilden, an die Kühlflüssigkeitsverteilkammer 1 angeschlossen. Die Kühlflüssigkeitsverteilkammer 1 besteht aus vier rechteckigen Seitenwänden 1' und zwei Abschlußdeckeln 1''. Auf der oberen Seitenfläche 1' der Kühlflüssigkeitsverteilkammer 1 befinden sich zwei Anschlußstutzen 8a, 9b, durch deren Öffnungen 8', 9' die Zufuhr- bzw. die Abführung der Kühlflüssigkeit erfolgt.

Die gezeichneten Pfeile stellen die Strömungsrichtung der Kühlflüssigkeit dar.

Gemäß Fig. 2 tritt die Kühlflüssigkeit im linken Teil der Kühlflüssigkeitsverteilkammer 1 ein und teilt sich in zwei Strömungsrichtungen auf. Ein Teil der Kühlflüssigkeit durchströmt die erste Bypassöffnung 2, die zwischen der oberen Wand 1' der Kühlflüssigkeitsverteilkammer 1 und der oberen Kante der ersten Trennwand 3 ausgebildet ist, wobei die Trennwand 3 wiederum unten und seitlich mit den Wänden 1' der Kühlflüssigkeitsverteilkammer 1 verbunden ist. Der andere Teil der Kühlflüssigkeit durchströmt nach Eintritt durch die Kühlkanaleintrittsöffnung 4a das Kühlkanalpaar 4, wird dabei erwärmt und verläßt das Kühlkanalpaar 4 durch die Kühlkanaleintrittsöffnung 4b, vermischt sich im Zwischenteil der Kühlflüssigkeitsverteilkammer 1 zwischen der ersten Trennwand 3 und der zweiten Trennwand 3' mit der kalten Kühlflüssigkeit, die durch die Bypassöffnung 2 direkt in den Zwischenteil der Kühlflüssigkeitsverteilkammer 1 gelangt ist, und wird abgekühlt.

In Fig. 2 ist die stufenweise Vergrößerung der Bypassöffnungen 2, 2' und 2'' in Strömungsrichtung der Kühlflüssigkeit deutlich ersichtlich. Im dargestellten Ausführungsbeispiel sind nur drei Kühlkanalpaare gezeichnet. Es ist aber selbstverständlich, daß eine beliebig große Anzahl von Kühlkanalpaaren in Serie geschaltet werden können. Durch diese konstruktive Maßnahme der Anordnung von Bypassöffnungen 2 bis 2'' in dem Kühlflüssigkeitsverteilkörper 1, die sich in Strömungsrichtung der Kühlflüssigkeit hin vergrößern, macht man sich die Tatsache zunutze, daß die in den Kühlkanälen 4 sich fortwährend erwärmende Kühlflüssigkeit durch, durch die Bypassöffnungen direkt tretende kalte Kühlflüssigkeit, nach Austritt aus den jeweiligen Kühlkanalpaaren, in der Kühlflüssigkeitsverteilkammer immer wieder gekühlt wird. Auf diese Weise kann eine beliebig große Anzahl von Kühlkanälen 4 in Serie geschaltet werden, ohne daß dabei die Kühlflüssigkeit vom Eintritt in das Kühlsystem bis zum Austritt, den Siedepunkt überschreitet.

Darüber hinaus kann mit dieser Kühlanordnung eine kombinierte Wasser-Dampf-Kühlung zur Anwendung kommen, wobei der entstehende Wasserdampf kontinuierlich und leicht durch die Bypassöffnungen 2 bis 2'' entweichen und so einfach aus dem Kühlsystem entfernt werden kann. Eine Gasblasenansammlung innerhalb des Kühlsystems wird so vollständig vermieden.

Fig. 3 zeigt den Schnitt III-III aus Fig. 2. Die Bezugsziffern beziehen sich auf die gleichen Teile wie in Fig. 2.

In Fig. 3 ist insbesondere die Krümmung der Kühlflüssigkeitsverteilkammer 1 gut sichtbar und diese Kühlflüssigkeitsvorrichtung könnte beispielsweise ein Kühlsegment für die Kesselwand eines Lichtbogenofens darstellen.

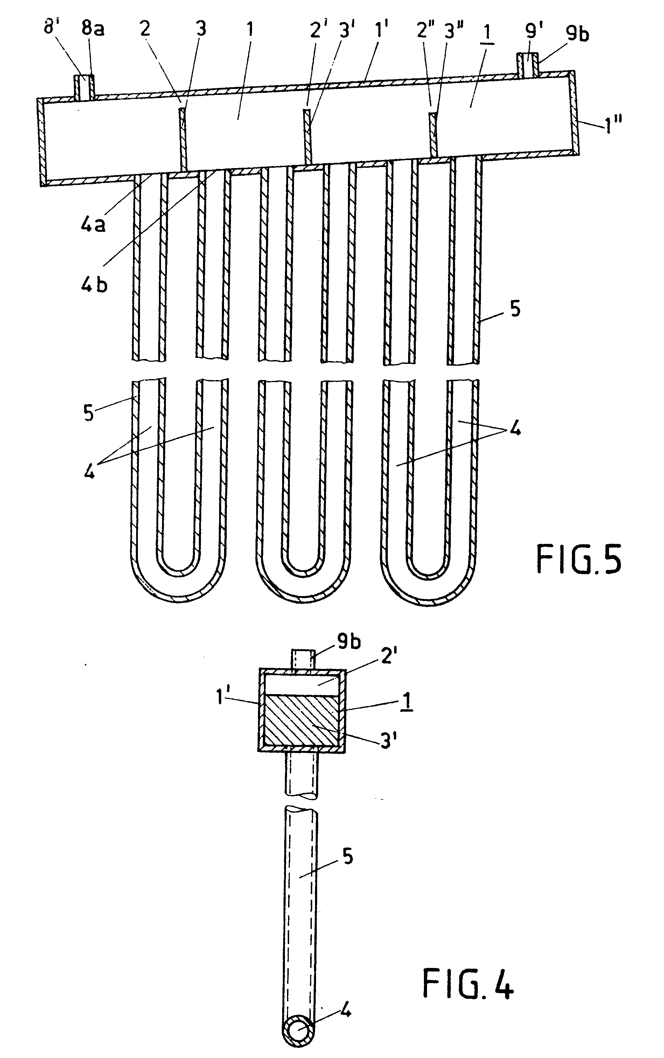

Fig. 4 zeigt den Schnitt IV-IV aus Fig. 2. In dieser Zeichnung sieht man besonders gut die Anordnung der Bypassöffnung 2', die zwischen der oberen Kante der Trennwand 3' und der oberen Wand 1' des Kühlflüssigkeitsverteilkörpers 1 ausgebildet ist.

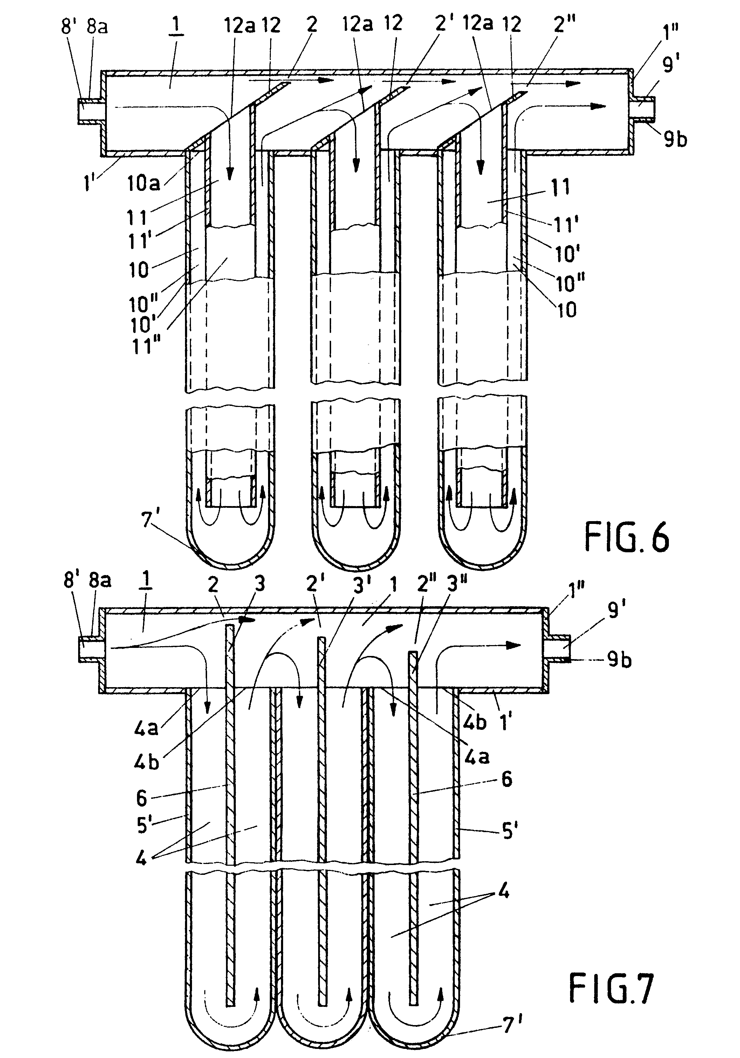

Fig. 5 zeigt eine Weiterbildung der Ausführungsform von Fig. 2. Die Zeichnung ist ebenfalls in vereinfachter Darstellung als vertikaler Schnitt dargestellt. Die Bezugsziffern beziehen sich auf die gleichen Teile wie in Fig. 2, 3 und 4.

Der Aufbau der Flüssigkeitskühlvorrichtung gemäß Fig. 5 entspricht derjenigen von Fig. 2, mit der Ausnahme, daß die Kühlflüssigkeitsverteilkammer 1 in Strömungsrichtung der Kühlflüssigkeit gegenüber der Horizontalen nach oben geneigt ist. Dadurch wird der Effekt des Entweichens von Gasblasen bzw. Wasserdampf aus dem Kühlsystem noch gefördert, indem man sich den Auftrieb der Gasblasen bzw. des Wasserdampfes zunutze macht.

Fig. 6 stellt eine beispielsweise weitere Ausbildungsform des erfindungsgemäßen Gegenstandes dar. Die Zeichnung ist wiederum vereinfacht als vertikaler Schnitt dargestellt. Ein inneres Rohr 11, welches unten offen ist, ist in der Längsrichtung parallel innerhalb eines äußeren Rohres 10 angeordnet und beide Rohre 10, 11 münden mit ihren distanzierten Wänden 10', 11' im oberen Teil der Rohre 10, 11 in die Kühlflüssigkeitsverteilkammer 1, wobei die Wand des äußeren Rohres 10' mit der Wand der Kühlflüssigkeitsverteilkammer 1' und die Wand des inneren Rohres 11' mit einem schräg verlaufenden Befestigungsblech 12, das gleichzeitig als Trennwand 12 ausgebildet ist, verbunden ist. Das äußere Rohr 10 ist unten mit einem Deckel 7 abgeschlossen, der im vorliegenden Beispiel als Kalotte 7' ausgebildet ist. In der Zeichnung sind 3 Rohrpaare mit jeweils einem inneren Rohr 11 und einem äußeren Rohr 10 an die Kühlflüssigkeitsverteilkammer 1 angeschlossen.

In den seitlichen Abschlußdeckel der Kühlflüssigkeitsverteilkammer 1'' ist ein Zufluß 8a-und ein Abflußstutzen 9b angebracht durch deren Öffnungen 8', 9' die Zufuhr- bzw. die Abführung der Kühlflüssigkeit erfolgt.

Die gezeichneten Pfeile stellen die Strömungsrichtung der Kühlflüssigkeit dar.

Gemäß Fig. 6 tritt die Kühlflüssigkeit in den linken Teil der Kühlflüssigkeitsverteilkammer 1 ein und teilt sich in zwei Strömungsrichtungen auf. Ein Teil der Flüssigkeitsmenge fließt direkt durch die Bypassöffnung 2, während der übrige Teil durch die Durchtrittsöffnung 12a in dem Befestigungsblech 12 in den durch das innere Rohr 11 gebildeten Zuflußkanal 11'' strömt und an dem offenen unteren Ende des inneren Rohres 11 in den Zwischenraum 10'', der durch die Wandungen 10', 11' des inneren Rohres 11 und des äußeren Rohres 10 gebildet wird, übertritt. In dem Zwischenraum 10'' strömt die Kühlflüssigkeit entsprechend den Pfeilrichtungen, von unten nach oben und kühlt somit die Wand 10' des äußeren Rohres 10 und tritt schließlich durch die Durchtrittsöffnung 10a wiederum in die Kühlflüssigkeitsverteilkammer 1 ein.

Die aus dem Zwischenraum 10'' in die Kühlflüssigkeitsverteilkammer 1 zurückfließende erwärmte Kühlflüssigkeit mischt sich dort mit der direkt durch die Bypassöffnung 2 gelangte kalte Kühlflüssigkeit, wie in Fig. 1 bzw. 2 beschrieben, und der Vorgang der Aufteilung der Kühlflüssigkeit in zwei Strömungsrichtungen, und zwar durch die Bypassöffnung 2' und durch die Durchtrittsöffnung 12a des inneren Rohres 11 des in der Zeichnung dargestellten mittleren Rohrpaares wiederholt sich erneut.

In Fig. 7 ist eine weitere Variante einer beispielsweisen Ausbildungsform des erfindungsgemäßen Gegenstandes dargestellt. Diese Zeichnung zeigt wiederum einen vertikalen Schnitt durch die Flüssigkeitskühlvorrichtung.

In die Kühlflüssigkeitsverteilkammer 1 münden drei dicht aneinandergereihte vertikale Rohre 5'. Die Rohre 5' sind am unteren Ende mit je einem Deckel 7 bzw. je einer Kalotte 7' verschlossen. Die Kühlkanäle 4 werden durch eine mittig in Rohrlängsrichtung verlaufende Scheidewand 6 gebildet, die vom unteren Rohrende beabstandet ist und die zuunterst im Rohr 5' einen Durchtritt für die Kühlflüssigkeit freiläßt. Die Scheidewand '6 setzt sich nach oben fort und bildet in der Kühlflüssigkeitsverteilkammer 1 die Trennwände 3, 3', 3''. Die Scheidewand 6 und die Trennwand 3 sind einstückig ausgeführt.

In den seitlichen Abschlußdeckeln der Kühlflüssigkeitsverteilkammer 1'' ist wiederum ein Zufluß 8a- und ein Abflußstutzen 9b angebracht, durch deren Öffnungen 8', 9' die Zufuhr- bzw. Abführung der Kühlflüssigkeit erfolgt.

Entsprechend den gezeichneten Pfeilen teilt sich der Strömungsfluß der Kühlflüssigkeit wiederum in dem Sinne auf, daß ein Teil durch die Bypassöffnungen 2, 2', 2'' abfließt und dementsprechend der übrige Teil durch die Kühlkanaleintrittsöffnungen 4a in die Kühlkanalpaare 4 gelangt und durch die Kühlkanalaustrittsöffnungen 4b wieder in die Kühlflüssigkeitsverteilkammer 1 zurückfließt.

Der weitere Strömungsverlauf vollzieht sich dann ebenso wie in Fig. 2 geschildert.

Es ist selbstverständlich, daß bei den Ausführungsformen gemäß Fig. 6 und 7 eine ebenso beliebig große Anzahl von Kühlkanälen 4 in Serie geschaltet werden können, und daß auch bei diesen Ausführungsformen die kombinierte Wasser- und Dampfkühlung zur Anwendung kommen kann.

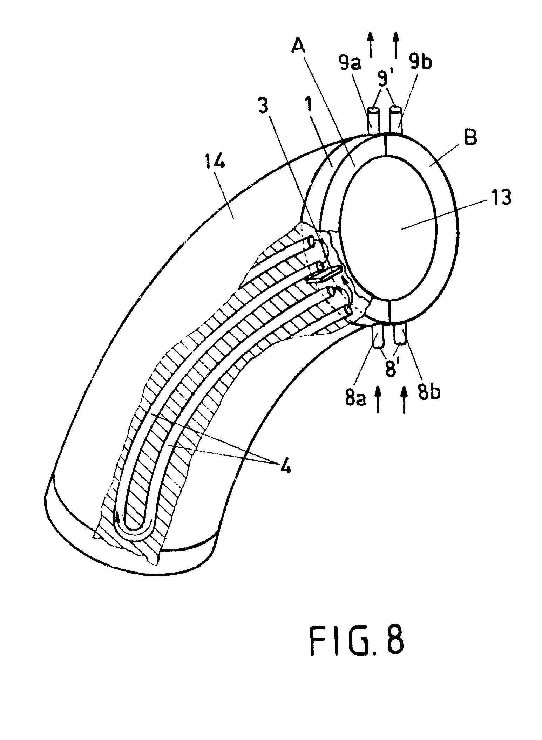

Fig. 8 zeigt eine Weiterbildung der Erfindung, bei welcher die erfindungsgemäße gekühlte Vorrichtung einem Rauchgasabzugstutzen für einen Lichtbogenofen angepaßt ist.

Fig. 8 ist eine perspektivische Zeichnung mit teilweisem Schnitt. In Fig. 8 sind zwei selbständige symmetrisch angeordnete Kühleinheiten A und B dargestellt, die jede für sich im wesentlichen derjenigen Ausführungsform gemäß Fig. 2 entsprechen, mit der Ausnahme, daß die Kühlkanäle entsprechend der Form des Rauchgaskanals gekrümmt sind.

Die Kühlflüssigkeitskammer 1 der ersten Flüssigkeitskühleinheit des Rauchgasabzugstutzens A ist mit einem Zufluß 8a- und einem Abflußstutzen 9a, und die der zweiten Flüssigkühleinheit B zugeordneten Kühlflüssigkeitskammer 1 mit dem Zufluß 8b- und dem Abflußstutzen 9b versehen. Durch die Öffnungen der Zuflußstutzen 8' bzw. der Abflußstutzen 9' wird die Kühlflüssigkeit zu- bzw. abgeleitet.

Die gezeichneten Pfeile in der geschnittenen linken Einheit A stellen die Strömungsrichtung der Kühlflüssigkeit dar. Es ist ersichtlich, daß zwischen einem Rohrpaar eine Trennwand 3 angeordnet ist und daß die Rohre zylinderförmig den Rauchgaskanal 13 einhüllen. Nach außen sind die Kühlkanäle mit einer äußeren Ummantelung des Rauchgaskanals 14 abgedeckt.

Fig. 8 ist lediglich schematisch wiedergegeben, und die Anschlußflansche, die den Rauchgasabsaugstutzen mit dem Deckelgewölbe des Ofens und mit der Rauchgasabsaugleitung verbinden, sind nicht dargestellt.

## Patentansprüche

1. Flüssigkeitskühlvorrichtung für thermisch hoch beanspruchte Bauteile eines Industrieofens mit mehreren, im wesentlichen vertikal angeordneten von Flüssigkeit durchströmten Kühlkanälen 4, 10″, 11″, wobei jeweils ein Kühlkanalpaar 4, 10″, 11″ für den Flüssigkeitszu- und -abfluß an ihren unteren Enden miteinander kommunizieren und mit wenigstens einem im wesentlichen horizontal angeordneten Kanal 1, welcher mit den oberen Enden der vertikal angeordneten Kühlkanäle 4, 10″, 11″ verbunden ist, dadurch gekennzeichnet, daß nur ein einziger oberhalb der Kühlkanäle 4, 10″, 11″ verlaufender Kanal 1, 2, 2′, 2″ vorgesehen ist, welcher in gleichsinniger Strömungsrichtung der Flüssigkeit, sowohl deren Zu- als auch deren Abfluß in den in Serie geschalteten Kühlkanälen 4, 10″, 11″ aufnimmt und daß der Kanal 1, 2, 2′, 2″ als Bypass für die jeweiligen Kühlkanäle 4, 10″, 11″ dient und sämtliche Kühlkanalpaare 4, 10″, 11″ jeweils teilweise kurzschließt.

2. Flüssigkeitskühlvorrichtung nach Anspruch 1, dadurch gekennzeichnet, daß die Bypassöffnung (2) derart bemessen ist, daß unter Berücksichtigung des hydraulischen Widerstandes der zugeordneten Kühlkanäle (4) eine vorbestimmbare Kühlflüssigkeitsmenge durch die Bypassöffnung(en) (2) strömt, die kleiner als diejenige ist, die durch die zugeordneten Kühlkanäle (4) strömt.

3. Flüssigkeitskühlvorrichtung nach Anspruch 1, dadurch gekennzeichnet, daß die Bypassöffnung (2) derart bemessen ist, daß unter Berücksichtigung des hydraulischen Widerstandes der zugeordneten Kühlkanäle (4) eine vorbestimmbare Kühlflüssigkeitsmenge durch die Bypassöffnung(en) (2) strömt, die gleich groß oder größer als diejenige ist, die durch die zugeordneten Kühlkanäle (4) strömt.

4. Flüssigkeitskühlvorrichtung nach Anspruch 1, dadurch gekennzeichnet, daß am unteren Ende paarweise jeweils zwei benachbarte Kühlkanäle (4) untereinander verbunden sind, wobei die Kühlkanäle (4) am oberen Ende mit ihren Eintritts- (4a) und Austrittsöffnungen (4b) an eine Kühlflüssigkeitsverteilkammer (1) angeschlossen sind, in der Trennwände (3) zur Führung der Kühlflüssigkeit angeordnet sind, wobei jede Trennwand (3) zwischen jeweils zwei am unteren Ende miteinander verbundenen Kühlkanäle (4) liegt und jede Trennwand (3) mit mindestens einer Bypassöffnung (2) versehen ist.

5. Flüssigkeitskühlvorrichtung nach wenigstens einem der Ansprüche 1 bis 4, dadurch gekennzeichnet, daß die Bypassöffnungen (2, 2′, 2″) einzeln oder in Gruppen stufenweise in Strömungsrichtung der Kühlflüssigkeit größere Durchtrittsöffnungen aufweisen.

6. Flüssigkeitskühlvorrichtung nach einem der Ansprüche 1 bis 5, dadurch gekennzeichnet, daß die Bypassöffnungen (2, 2′, 2″) zwischen der oberen Kante der Trennwände (3, 12) und der oberen Wand (1′) der Kühlflüssigkeitsverteilkammer (1) angeordnet sind.

7. Flüssigkeitskühlvorrichtung nach Anspruch 1, dadurch gekennzeichnet, daß die Kühlkanäle (4) aus einem U-förmig gebogenen Rohr (5) gebildet sind, dessen obere Enden durch ein Verbindungsrohr 5″ kurzgeschlossen sind.

8. Flüssigkeitskühlvorrichtung nach Anspruch 4, dadurch gekennzeichnet, daß die Kühlkanäle (4) aus einem U-förmig gebogenen Rohr (5) gebildet sind, dessen obere Enden in die Kühlflüssigkeitsverteilkammer (1) münden.

9. Flüssigkeitskühlvorrichtung nach Anspruch 4, dadurch gekennzeichnet, daß die Kühlkanäle (4) aus einem unten verschlossenen Rohr (5′) bestehen, in welchem mittig eine in Rohrlängsrichtung verlaufende Scheidewand (6) angeordnet ist, die vom unteren Rohrende beabstandet ist und die zuunterst im Rohr einen Durchtritt für die Kühlflüssigkeit freiläßt.

10. Flüssigkeitskühlvorrichtung nach Anspruch 9, dadurch gekennzeichnet, daß das Rohr (5′) mit einem Deckel (7), vorzugsweise einer Kalotte (7′), verschlossen ist.

11. Flüssigkeitskühlvorrichtung nach Anspruch 4, dadurch gekennzeichnet, daß in einem äußeren Rohr (10), welches am unteren Ende mit einem Deckel (7) bzw. einer Kalotte (7′) verschlossen ist, ein unten offens inneres Rohr (11) befestigt, und die Wandungen (10′, 11′) der Rohre (10, 11) an ihrem oberen Ende in die Kühlflüssigkeitsverteilkammer (1) münden, wobei das äußere Rohr (10) mit der Wand (1′) der Kühlflüssigkeitsverteilkammer (1), und das innere Rohr (11) mit einem Befestigungsblech (12), das gleichzeitig die Trennwand (3) bildet, verbunden sind, und vorzugsweise das innere Rohr (11) für die Kühlflüssigkeitszufuhr und das äußere Rohr (10) für die Kühlflüssigkeitsabführung dient.

12. Flüssigkeitskühlvorrichtung nach wenigstens einem der Ansprüche 4 bis 11, dadurch gekennzeichnet, daß die Kühlflüssigkeitsverteilkammer (1) in Strömungsrichtung der Kühlflüssigkeit gegenüber der Horizontalen nach oben geneigt ist.

13. Flüssigkeitskühlvorrichtung nach Anspruch 9 oder 10, dadurch gekennzeichnet, daß die Scheide (6)- und die Trennwand (3) einstükkig ausgebildet sind.

14. Verwendung der Flüssigkeitskühlvorrichtung gemäß einem oder mehreren vorangegangenen Ansprüchen 1 bis 13 zur Kühlung der Wandung eines Elektroofens.

15. Verwendung nach Anspruch 14, wobei mehrere Flüssigkeitskühlvorrichtungen an der Ofenwandung oberhalb des Badspiegels angeordnet sind.

16. Verwendung der Flüssigkeitskühlvorrichtung gemäß einem oder mehreren vorangegangenen Ansprüchen 4 bis 13 zur Kühlung des Rauchgasabzugstutzens eines Elektroofens, wobei die Kühlkanäle des Rauchgasabzugstutzens in die Wandung des Stutzens integriert sind.

**Claims**

1. Liquid-cooling device for components of an industrial furnace which are subjected to high thermal loads, having several, essentially vertically arranged cooling channels (4, 10″, 11″)

through which liquid flows, the lower ends of each cooling channel pair (4, 10″, 11″) for the liquid supply and discharge communicating with one another and each cooling channel pair (4, 10″, 11″) having at least one channel (1) which is essentially arranged horizontally and is connected to the upper ends of the vertically arranged cooling channels (4, 10″, 11″), characterised in that only a single channel (1, 2, 2′, 2″) is provided which runs above the cooling channels (4, 10″, 11″) and which accommodates both the supply and discharge of the liquid in the same flow direction of the latter in the cooling channels (4, 10″, 11″), which are connected in series, and that the channel (1, 2, 2′, 2″) acts as a bypass for the respective cooling channels (4, 10″, 11″) and in each case partially shorts all cooling channel pairs (4, 10″, 11″).

2. Liquid-cooling device according to claim 1, characterised in that the bypass opening (2) is of such a size that, when the hydraulic resistance of the allocated cooling channels (4) is taken into account, a predeterminable coolant quantity which is smaller than that which flows through the allocated cooling channels (4) flows through the bypass opening(s) (2).

3. Liquid-cooling device according to claim 1, characterised in that the bypass opening (2) is of such a size that, when the hydraulic resistance of the allocated cooling channels (4) is taken into account, a predeterminable coolant quantity which is the same size as or larger than that which flows through the allocated cooling channels (4) flows through the bypass opening(s) (2).

4. Liquid-cooling device according to claim 1, characterised in that two adjacent cooling channels (4) are in each case connected to one another in pairs at the lower end, the cooling channels (4) being connected at the upper end to a coolant distribution chamber (1) by their inlet openings (4a) and their outlet openings (4b), in which coolant distribution chamber (1) are arranged dividing walls (3) for guiding the coolant, each dividing wall (3) being located in each case between two of the cooling channels (4) which are connected to one another at the lower end, and each dividing wall (3) being provided with at least one bypass opening (2).

5. Liquid-cooling device according to at least one of claims 1 to 4, characterised in that the bypass openings (2, 2′, 2″), individually or in groups, have gradually larger passage openings in the flow direction of the coolant.

6. Liquid-cooling device according to one of claims 1 to 5, characterised in that the bypass openings (2, 2′, 2″0′) are arranged between the upper edge of the dividing walls (3, 12) and the upper wall (1′) of the coolang distribution chamber (1).

7. Liquid-cooling device according to claim 1, characterised in that the cooling channels (4) are formed from a tube (5) which is bent in a U shape, the upper ends of which are shorted by a connecting tube (5″) (fig. 1).

8. Liquid-cooling device according to claim 4, characterised in that the cooling channels (4) are formed from a tube (5) which is bent in a U shape, the upper ends of which lead into the coolant distribution chamber (1).

9. Liquid-cooling device according to claim 4, characterised in that the cooling channels (4) consist of a tube (5′) which is closed at the bottom and in which a partition wall (6) is centrally arranged which runs in the longitudinal direction of the tube is positioned at a distance from the lower end of the tube and, at the very bottom of the tube, leaves open a passage for the coolant.

10. Liquid-cooling device according to claim 9, characterised in that the tube (5′) is closed by a cover (7), preferably a hemispherical part.

11. Liquid-cooling device according to claim 4, characterised in that an inner tube (11) which is open at the bottom is fixed in an outer tube (10) which is closed at the lower end by a cover (7) or hemispherical part (7′), and the walls (10′, 11′) of the tubes (10, 11), at their upper end, lead into the coolant distribution chamber (1), the outer tube (10) being connected to the wall (1′) of the coolant distribution chamber (1) and the inner tube (11) being connected to an attachment plate (12) which at the same time forms the dividing wall (3), and the inner tube (11) preferably being used for the coolant supply and the outer tube (10) preferably being used for the coolant discharge.

12. Liquid-cooling device according to at least one of claims 4 to 11, characterised in that the coolant distribution chamber (1) slopes upwards relativ to the horizontal in the flow direction of the coolant.

13. Liquid-coolant device according to claim 9 or 10, characterised in that the partition wall (6) and the dividing wall (3) are designed in one piece.

14. Use of the liquid-cooling device according to one or more of the preceding claims 1 to 13 for cooling the wall of an electric furnace.

15. Use according to claim 14, several liquid-cooling devices being arranged on the furnace wall above the bath level.

16. Use of the liquid-cooling device according to one or more of the preceding claims 4 to 13 for cooling the flue-gas discharge connecting piece of an electric furnace, the cooling channels of the flue-gas discharge connecting piece being integrated into the wall of the connecting piece.

**Revendications**

1. Dispositif à refroidissement par liquide pour des éléments fortement sollicités thermiquement d'un four industriel, avec plusieurs canaux de refroidissement 4, 10″, 11″, disposés de façon essentiellement verticale et parcourus par un liquide, dans lequel les canaux de refroidissement 4, 10″, 11″ de chaque paire communiquent l'un avec l'autre par leurs extrémités inférieures pour assurer l'arrivée et l'évacuation du liquide, et avec au moins un canal 1 disposé de façon sensiblement horizontale, qui est raccordé aux extrémités supérieures des canaux de refroidissement 4, 10″, 11″ disposés verticalement, caractérisé en ce qu'il n'est prévu au-dessus des canaux de refroidissement, qu'un seul canal 1, 2, 2′, 2″, qui comporte, dans le même sens que l'écoulement du liquide, aussi bien l'arrivée que l'évacuation de celui-ci dans les canaux de refroidissement 4, 10″, 11″ montés en série et en ce que le canal 1, 2, 2′, 2″ sert de by-pass pour chacun des canaux de refroidissement 4, 10″, 11″ et court-circuite chaque fois partiellement, toutes les paires de canaux de refroidissement 4, 10″, 11″.

2. Dispositif à refroidissement par liquide suivant la revendication 1, caractérisé en ce que l'ouverture de by-pass (2) est dimensionnée de telle façon que, compte tenu de la résistance hydraulique des canaux de refroidissement (4) qui y sont agencés, il s'écoule à travers 1′ (les) ouverture(s) de by-pass (2) un débit prédéterminable de liquide de refroidissement qui est inférieur à celui qui circule à travers les canaux de refroidissement (4) qui y sont agencés.

3. Dispositif à refroidissement par liquide suivant la revendication 1, caractérisé en ce que l'ouverture de by-pass (2) est dimensionnée de telle façon que, compte tenu de la résistance hydraulique des canaux de refroidissement (4) qui y sont agencés, il s'écoule à travers 1′ (les) ouverture(s) de by-pass (2) un débit prédéterminable de liquide de refroidissement qui est égal ou supérieur à celui qui circule à travers les canaux de refroidissement (4) qui y sont agencés.

4. Dispositif à refroidissement par liquide suivant la revendication 1, caractérisé en ce que chaque fois, deux canaux de refroidissement (4) sont reliés l'un à l'autre en une paire par leurs extrémités inférieures, tandis qu'à leur extrémité supérieure, ils sont raccordés par leurs orifices d'entrée (4a) et de sortie (4b) à une chambre (1) de répartition du liquide de refroidissement, dans laquelle sont disposées des cloisons (3) de guidage du liquide de refroidissement, chaque cloison (3) étant située entre deux canaux de refroidissement (4) raccordés par leurs extrémités inférieures et chaque cloison (3) étant pourvue d'au moins une ouverture de by-pass (2).

5. Dispositif à refroidissement par liquide suivant au moins une des revendications 1 à 4, caractérisé en ce que les ouvertures de by-pass (2, 2′, 2″) présentent, séparément ou en groupes, des sections de passage graduellement croissantes dans le sens de l'écoulement du liquide de refroidissement.

6. Dispositif à refroidissement par liquide suivant une des revendications 1 à 5, caractérisé en ce que les ouvertures de by-pass (2, 2′, 2″) sont ménagées entre l'arête supérieure des parois de séparation (3, 12) et la paroi supérieure (1′) de la chambre (1) de répartition du liquide de refroidissement.

7. Dispositif à refroidissement par liquide suivant la revendication 1, caractérise en ce que les canaux de refroidissement (4) sont constitués d'un tube (5) cintré en U, dont les extrémités supérieures sont court-circuitées par un tube de liaison (5″) (fig. 1).

8. Dispositif à refroidissement par liquide suivant la revendication 4, caractérisé en ce que les canaux de refroidissement (4) consistent en un tube (5) cintré en U, dont les extrémités supérieures débouchent dans la chambre (1) de répartition du liquide de refroidissement.

9. Dispositif à refroidissement par liquide suivant la revendication 4, caractérisé en ce que les canaux de refroidissement (4) consistent en un tube (5′) fermé vers le bas, à mi-longueur duquel est disposée une paroi de séparation (6) s'étendant dans la direction logitudinale du tube, qui est distante du bord inférieur du tube et qui laisse libre, à la partie la plus inferieure du tube, un passage pour le liquide de refroidissement.

10. Dispositif à refroidissement par liquide suivant la revendication 9, caractérisé en ce que le tube (5′) est fermé au bas par un couvercle (7), de préférence par une calotte (7′).

11. Dispositif à refroidissement par liquide suivant la revendication 4, caractérisé en ce que, dans un tube extrérieur (10), qui est fermé à son extrémité inférieure par un couvercle (7) ou par une calotte (7′), est fixé un tube intérieur (11) ouvert au bas, et en ce que les parois (10′, 11′) des tubes (10, 11) débouchent par leur extrémité supérieure dans la chambre (1) de répartition du liquide de refroidissement, le tube extérieur (10) étant réuni à la paroi (1′) de la chambre (1) de répartition du liquide de refroidissement et le tube intérieur (11) étant réuni à une tôle de fixation (12) qui sert également de cloison (3), le tube intérieur (11) servant de préférence pour l'alimentation en liquide de refroidissement et le tube extérieur (10) servant de préférence pour l'évacuation du liquide de refroidissement.

12. Dispositif à refroidissement par liquide suivant au moins une des revendications 4 à 11, caractérisé en ce que la chambre (1) de répartition du liquide de refroidissement est inclinée vers le haut par rapport à l'horizontale dans le sens de l'écoulement du liquide de refroidissement.

13. Dispositif à refroidissement par liquide suivant la revendication 9 ou 10, caractérisé en ce que la paroi de séparation (6) et la cloison (3) sont réalisées en une seule pièce.

14. Utilisation du dispositif à refroidissement par liquide suivant l'une ou plusieurs des revendications précédentes 1 à 13, pour le refroidissement de la paroi d'un four électrique.

15. Utilisation suivant la revendication 14, dans laquelle plusieurs dispositifs à refroidissement par liquide sont disposés à la paroi du four au-dessus du niveau du bain.

16. Utilisation du dispositif à refroidissement par liquide suivant une ou plusieurs des revendications précédentes 4 à 13 pour le refroidissement d'un conduit d'aspiration des gaz de fumée d'un four électrique, dans laquelle les canaux de refroidissement du conduit d'aspiration des gaz de fumée sont incorporés dans la paroi du conduit.

FIG.1

# FIG.2

# FIG.3

FIG.5

FIG.4

FIG.6

FIG.7

FIG. 8